# EUROPEAN PATENT APPLICATION

(11) **EP 4 230 507 A1**
(43) Date of publication of application: **23.08.2023**
(21) Application number: 22215432.0
(22) Date of filing: 21.12.2022
(51) Int. Cl.: B62D 25/16

(54) **LOCKING/UNLOCKING DEVICE FOR VEHICLE MUDGUARDS AND MUDGUARD ASSEMBLY**

(30) Priority: 16.02.2022 IT 202200002795
(71) Applicant: DOMAR S.p.A., 70022 Altamura, Bari (IT)
(72) Inventor: FIORE, Pasquale, I-70022 Altamura, BARI (IT); DENTE, Daniele, I-70022 Altamura, BARI (IT)
(74) Representative: Mitola, Marco

(57) **Abstract**

A locking/unlocking device (4) for a mudguard (8) of vehicles (12), comprising a first fixing ring (16) comprising a first annular portion (20) delimiting a first cylindrical seat (24) of longitudinal axis (X-X), adapted to accommodate a support rod (26) for said mudguard (8) and provided with first fixing means (28) to said mudguard (8), wherein said first fixing means (28) comprise a first slide (30), adapted to obtain a shape coupling with a first guide (32) of said mudguard (8), and first stop means (34) of said first slide (30) on the first guide (32), a second fixing ring (66) comprising a second annular portion (70) adapted to accommodate said support rod (26) for said mudguard (8) and provided with second fixing means (72) to said mudguard (8), wherein said second fixing means (72) comprise a second slide (76), adapted to obtain a shape coupling with a second guide (80) of said mudguard (8), and second stop means (82) of said second slide (76) on the second guide (80). Said second fixing ring (66) is mechanically separated from said first fixing ring (16). [Fig. 1]

## Description

### FIELD OF APPLICATION

The present invention is directed to a locking/unlocking device for vehicle mudguards and a related mudguard assembly.

### BACKGROUND ART

It is known, vehicles, in particular industrial vehicles, such as vans, trucks, lorries and heavy vehicles in general, are provided with large mudguards, which need to be fixed to the chassis quickly and at the same time safely.

Mudguards are typically provided with supports comprising hollow tubular elements which are inserted on appropriate support tubes fixed to the vehicle chassis. Mutual fixing is achieved with fixing means, such as screws, bolts, and/or snap fixing clips.

There are several mudguard models on the market, and they can vary, for example, in size, curvatures, thicknesses, widths, whereby each mudguard can be mounted on the vehicle chassis by means of specific locking/unlocking devices.

Therefore, the solutions of the prior art are expensive because they should be made specifically for each mudguard model.

Moreover, in order to ensure the necessary reliability, the locking/unlocking solutions of the prior art are heavy and expensive to implement.

### PRESENTATION OF THE INVENTION

The need is thus felt to solve the drawbacks and limitations mentioned with reference to the prior art.

Such a need is met by a locking/unlocking device according to claim 1 and by a mudguard assembly according to claim 15.

### DESCRIPTION OF THE DRAWINGS

Further features and advantages of the present invention will become more comprehensible from the following description of preferred, non-limiting embodiments thereof, in which:

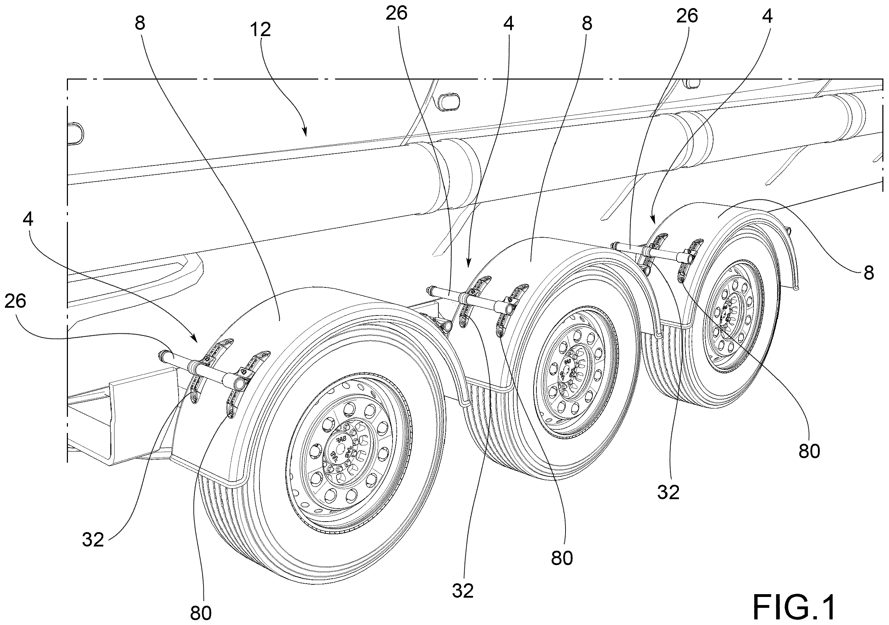

figure 1 depicts a perspective view of an industrial vehicle which mounts mudguard assemblies according to an embodiment of the present invention;

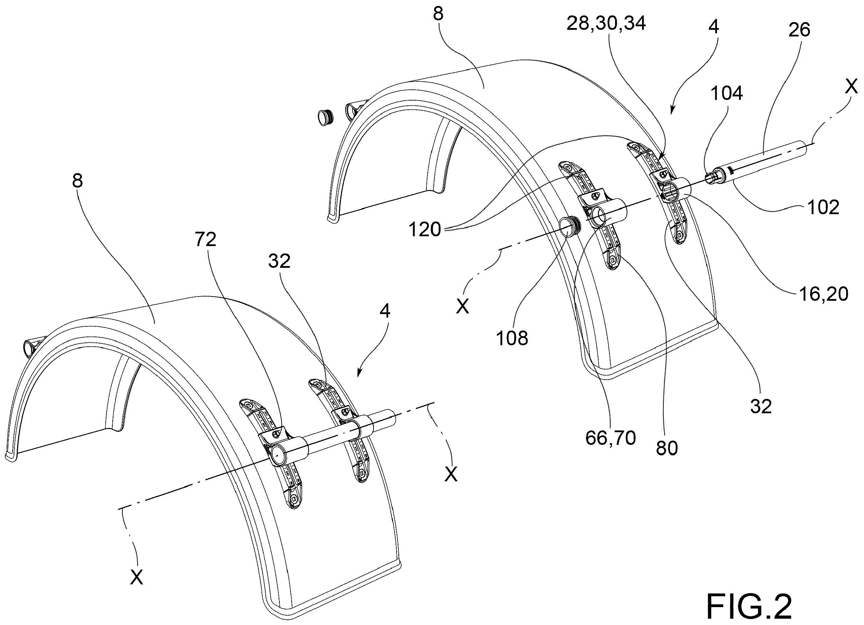

figure 2 depicts an enlarged perspective view of the mudguard assembly in figure 1, in an assembled and partially exploded configuration;

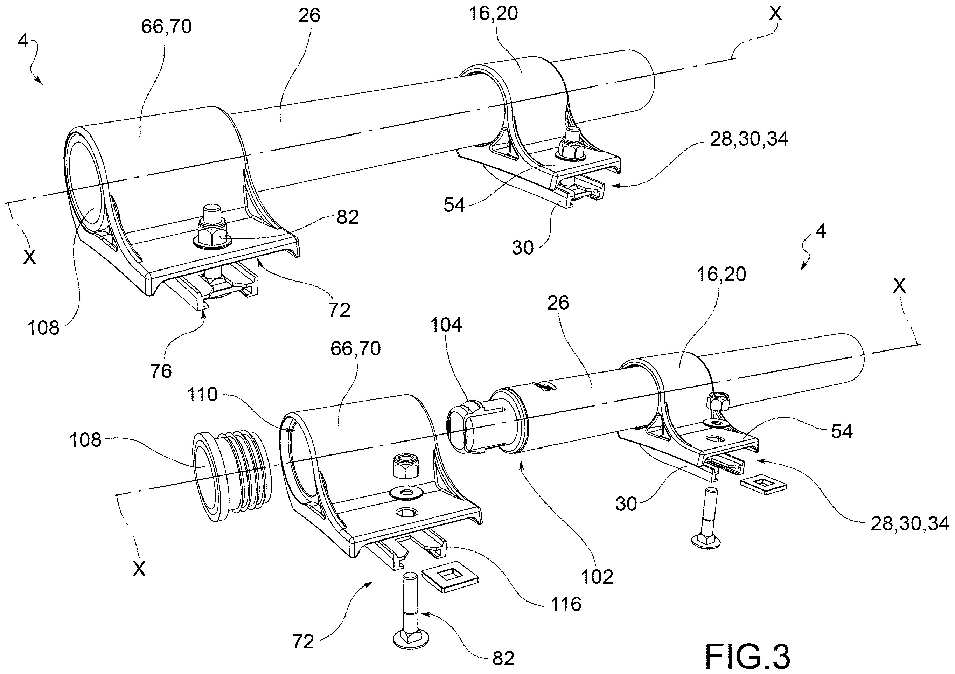

figure 3 depicts an enlarged perspective view of the locking/unlocking devices of the mudguard assemblies in figure 1, in an assembled and partially exploded configuration;

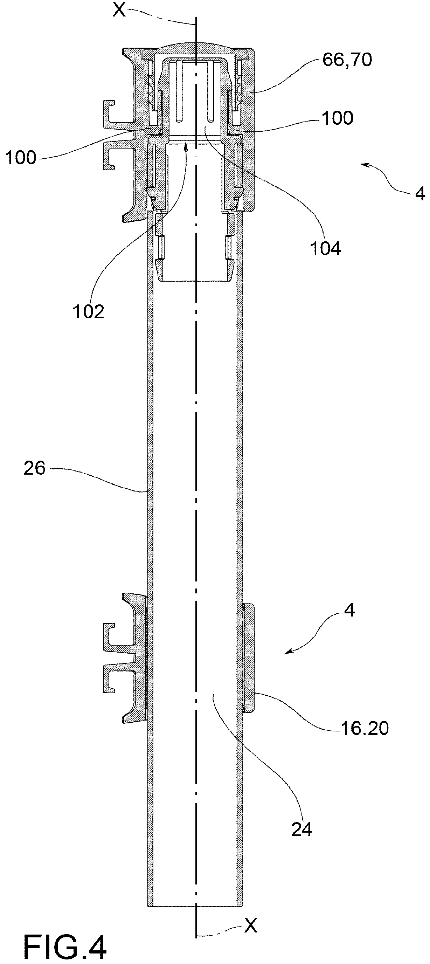

figure 4 depicts a section view, in an assembled configuration, of a locking/unlocking device according to a possible embodiment of the present invention;

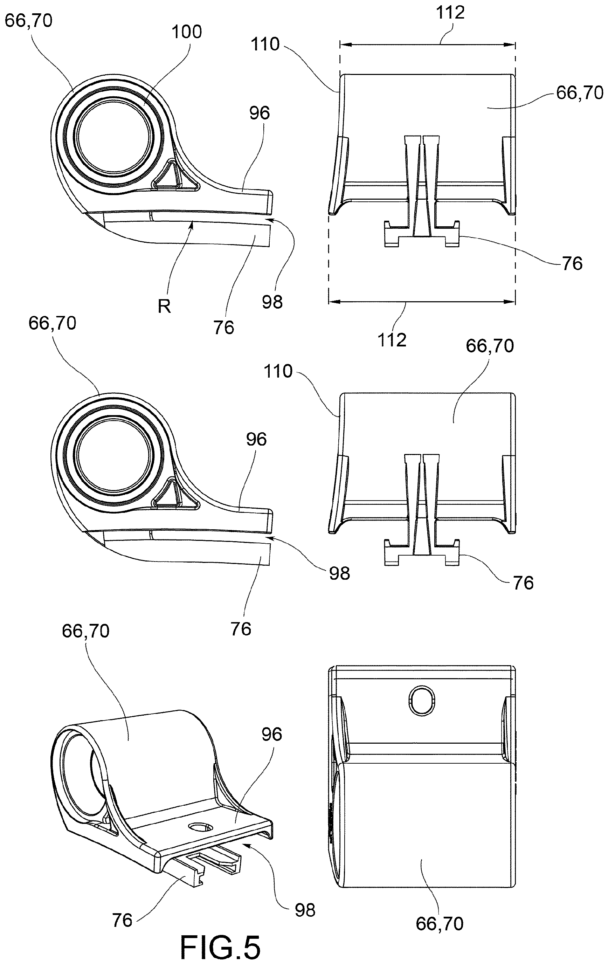

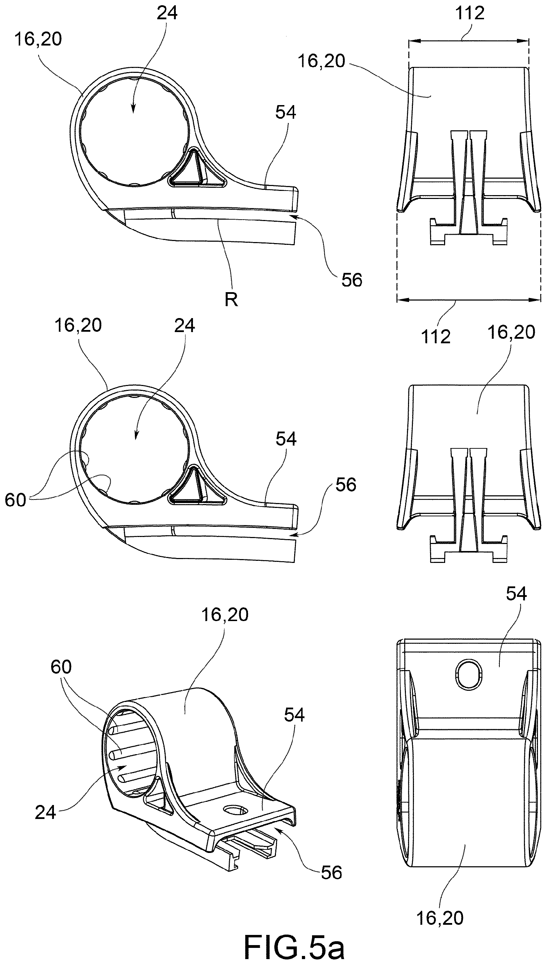

figures 5-5a depict several perspective and side views of the locking/unlocking device according to the present invention;

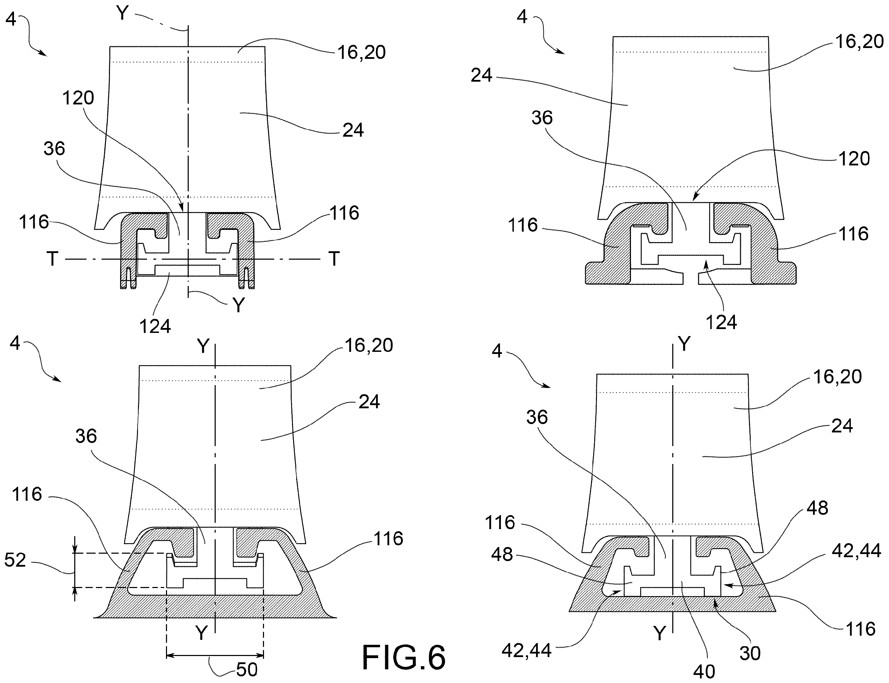

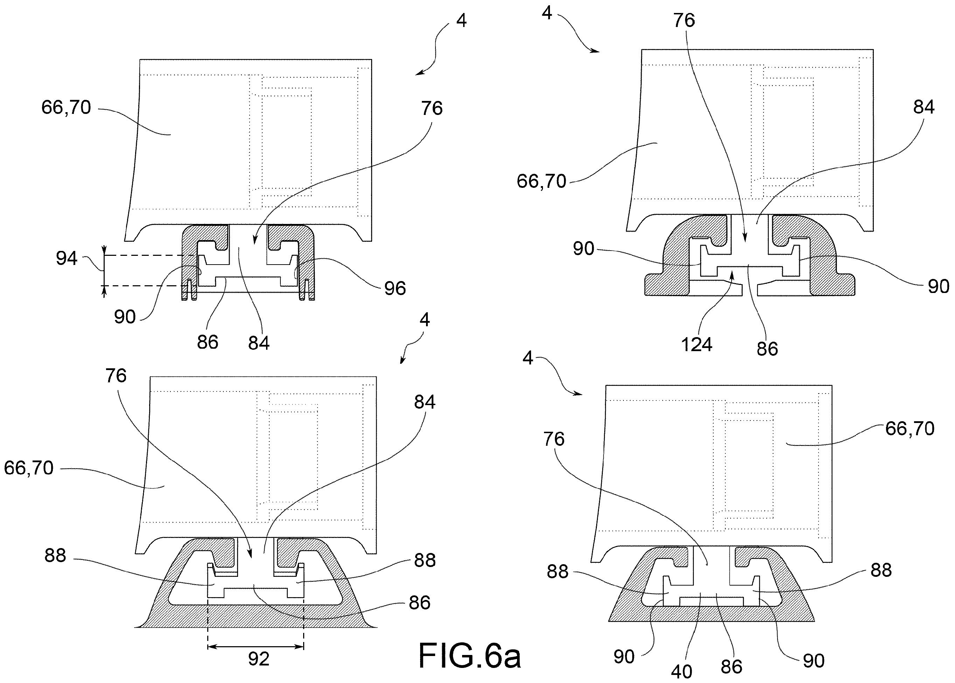

figure 6 depicts section views, in an assembled configuration, of locking/unlocking devices according to the present invention, mounted on various mudguard guides of industrial vehicles.

The elements or parts of elements common to the embodiments described below will be indicated by the same reference numerals.

### DETAILED DESCRIPTION

With reference to the aforesaid figures, reference numeral 4 indicates, as a whole, an overall diagrammatic view of a locking/unlocking device for a mudguard 8 of vehicles 12. For the purposes of the present invention, the type of mudguard 8 or even the type of vehicle 12 on which the latter is applied is negligible.

Said locking/unlocking device 4 comprises a first fixing ring 16 comprising a first annular portion 20 delimiting a first cylindrical seat 24 of longitudinal axis X-X, adapted to accommodate a support rod 26 for said mudguard 8 and provided with first fixing means 28 to said mudguard 8.

Said first fixing means 28 comprise a first slide 30, adapted to obtain a shape coupling with a first guide 32 of said mudguard 8, and first stop means 34 of said first slide 30 on the first guide 32.

The first slide 30 comprises a first upright 36 directed along a vertical direction Y-Y, perpendicular to said longitudinal axis X-X, and a first crosspiece 40 directed along a transverse direction T-T, parallel to said longitudinal axis X-X, and arranged symmetrically with respect to the first upright 36.

According to a possible embodiment, the first crosspiece 40 ends, at opposite transverse ends 42, with a pair of first fixing appendages 44 extending along said vertical direction Y-Y, from sides opposite to the first crosspiece 40 itself.

For example, first fixing appendages 44 have first straight side walls 48, perpendicular to said transverse direction T-T.

Preferably, said first straight side walls 48 are mutually spaced apart by a first transverse dimension 50 between 30 mm and 34 mm.

Preferably, said first fixing appendages 44 have a first vertical height 52 between 8 mm and 12 mm.

Preferably, the ratio between said first transverse dimension 50 and said first vertical height 52 is between 2.5 and 4.25.

For example, the first crosspiece 40 is configured as a cantilevered beam directed along a tangential axis, perpendicular to said longitudinal axis X-X, said beam being curvilinear and having a radius of curvature R between 600 and 700 mm, preferably of 660 mm. This value of radius of curvature R allows an easy adaptability of the crosspiece with respect to any mudguard slide on the market.

According to a possible embodiment, the first stop means 34 comprise a first flexible plate 54 superimposed on the first slide 30 and separated therefrom by a first meatus 56, so as to house the first guide 32 of the mudguard 8. Said first plate 54 is flexible along said vertical direction Y-Y so as to reduce said first meatus 56 if subjected to traction by the first stop means 34.

The first stop means 34 are configured to apply a bending action of the first flexible plate 54 towards the first slide 30, parallel to a vertical direction Y-Y. For example, said first stop means 34 comprise screws, bolts, and the like, perpendicular to said longitudinal X-X axis.

According to a possible embodiment, said first cylindrical seat 24 has, on an inner side wall, a plurality of ribs 60, preferably parallel to said longitudinal axis X-X.

The locking/unlocking device 4 further comprises a second fixing ring 66 comprising a second annular portion seat 70 adapted to accommodate said support rod 26 for said mudguard 8 and provided with second fixing means 72 to said mudguard 8.

Said second fixing means 72 comprise a second slide 76, adapted to obtain a shape coupling with a second guide 80 of said mudguard 8, and second stop means 82 of said second slide 76 on the second guide 80.

The second fixing ring 66 is mechanically separated from said first fixing ring 16.

The second slide 76 comprises a second upright 84 directed along a vertical direction Y-Y, perpendicular to said longitudinal axis X-X, and a second crosspiece 86 directed along a transverse direction T-T, parallel to said longitudinal axis X-X, arranged symmetrically with respect to the second upright 84.

Preferably, the second crosspiece 86 ends, at opposite transverse ends 42, with a pair of second fixing appendages 88 extending along said vertical direction Y-Y, from sides opposite to the second crosspiece 86 itself.

Said second fixing appendages 88 have second straight side walls 90, perpendicular to said transverse direction T-T.

For example, said second straight side walls 90 are mutually spaced apart by a second transverse dimension 92 between 30 mm and 34 mm.

For example, said second fixing appendages 88 have a second vertical height 94 between 8 mm and 12 mm.

Preferably, the ratio between said second transverse dimension 92 and said second vertical height 94 is between 2.5 and 4.25.

For example, the second crosspiece 86 is configured as a cantilevered beam directed along a tangential axis, perpendicular to said longitudinal axis X-X, said beam being curvilinear and having a radius of curvature R between 600 and 700 mm, preferably of 660 mm. This value of radius of curvature R allows an easy adaptability of the crosspiece with respect to any mudguard slide on the market.

The second stop means 82 comprise a second flexible plate 96 superimposed on the second slide 76 and separated therefrom by a second meatus 98, so as to house the second guide 80 of the mudguard 8, said second plate 96 being flexible along said vertical direction Y-Y so as to reduce said second meatus 98 if subjected to traction by the second stop means 82.

The second stop means 82 are configured to apply a bending action of the second flexible plate 96 towards the second slide 76, parallel to a vertical direction Y-Y, perpendicular to said longitudinal axis X-X. For example, said second stop means 82 comprise screws, bolts, and the like.

According to a possible embodiment, the second fixing ring 66 comprises an inner axial shoulder 100 which creates an end stroke in the axial insertion of a cantilevered end 102 of the support rod 26 for said mudguard 8.

According to a possible embodiment, the locking/unlocking device 4 comprises a coupling cap 104, associable with the support rod 26 and configured to obtain a shape coupling with said inner axial shoulder 100.

Preferably, the second fixing ring 66 is provided with a closing cap 108 to plug an end 110 of said second fixing ring 66 opposite to said cantilevered end 102 of the support rod 26.

Preferably, said first fixing ring 16 and second fixing ring 66 have a longitudinal extension 112, parallel to said longitudinal axis X-X, between 50 mm and 80 mm.

As seen, the present invention is also directed to a mudguard assembly comprising a locking/unlocking device 4 and a mudguard 8 provided with a first and a second tangential guide 32,80, parallel to each other.

Preferably, each of said guides 32,80 comprises a pair of fins 116 shaped so as to delimit a seat for said slides 30,76; said seat has an upper transverse opening 120 which is greater than or equal to a transverse width of the upright 36,84 and a lower chamber 124 having a greater transverse width than the transverse width of the crosspiece 40,86 with the related fixing appendages 44,88.

Said tangential guides 32,80 can be inserted into the mudguard 8 and fixed using connecting means, such as screws, rivets, bolts, and the like.

Said tangential guides 32,80 are also possibly co-molded with the mudguard 8.

As can be appreciated from the above description, the present invention allows overcoming the drawbacks presented in the prior art.

In particular, the present invention, by virtue of the particular shape of the ring fixing means, can be mounted on mudguards having different size; therefore, the solution of the present invention is universal.

Moreover, by virtue of the mechanical separation of the two fixing rings, the locking/unlocking device can be mounted on mudguards provided with guides having a different pitch.

Therefore, mounting the mudguard assembly on the vehicle chassis is easy and effective due to the shape coupling means, such as snap-on coupling means, for example, provided.

By virtue of the geometric dimensions and configurations described, it is possible to adapt the locking/unlocking devices to different mudguards on the market so as to provide a universal type of support for vehicle mudguards.

In order to meet specific contingent needs, those skilled in the art may make several changes and variations to the solutions described above.

The scope of protection of the invention is defined by the following claims.

## Claims

1. Locking/unlocking device (4) for a mudguard (8) of vehicles (12), comprising
- a first fixing ring (16) comprising a first annular portion (20) delimiting a first cylindrical seat (24) of longitudinal axis (X-X), adapted to accommodate a support rod (26) for said mudguard (8) and provided with first fixing means (28) to said mudguard (8), wherein said first fixing means (28) comprise a first slide (30), adapted to obtain a shape coupling with a first guide (32) of said mudguard (8), and first stop means (34) of said first slide (30) on the first guide (32),
- a second fixing ring (66) comprising a second annular portion (70) adapted to accommodate said support rod (26) for said mudguard (8) and provided with second fixing means (72) to said mudguard (8), wherein said second fixing means (72) comprise a second slide (76), adapted to obtain a shape coupling with a second guide (80) of said mudguard (8), and second stop means (82) of said second slide (76) on the second guide (80),
- wherein said second fixing ring (66) is mechanically separated from said first fixing ring (16).

2. Locking/unlocking device (4) for a mudguard (8) of vehicles (12) according to claim 1, wherein the first slide (30) comprises a first upright (36) directed along a vertical direction (Y-Y), perpendicular to said longitudinal axis (X-X), and a first crosspiece (40) directed along a transverse direction (T-T), parallel to said longitudinal axis (X-X), arranged symmetrically with respect to the first upright (36), wherein the first crosspiece (40) ends, at opposite transverse ends (42), with a pair of first fixing appendages (44) extending along said vertical direction (Y-Y), from parts opposite the first crosspiece (40) itself.

3. Locking/unlocking device (4) for a mudguard (8) of vehicles (12) according to claim 2, wherein said first fixing appendages (44) have first straight side walls (48), perpendicular to said transverse direction (T-T), wherein said first straight side walls (48) are spaced apart by a first transverse dimension (50) between 30 mm and 34 mm.

4. Locking/unlocking device (4) for a mudguard (8) of vehicles (12) according to any one of claims 2 to 3, wherein said first fixing appendages (44) have a first vertical height (52) between 8 mm and 12 mm.

5. Locking/unlocking device (4) for a mudguard (8) of vehicles (12) according to claim 3 in combination with claim 4, wherein the ratio between said first transverse dimension (50) and said first vertical height (52) is between 2.5 and 4.25.

6. Locking/unlocking device (4) for a mudguard (8) of vehicles (12) according to any one of claims 1 to 5, wherein the first crosspiece (40) is configured as a direct cantilevered beam along a tangential axis, perpendicular to said longitudinal axis (X-X), said beam being curvilinear and having a radius of curvature (R) between 600 and 700 mm, preferably equal to 660 mm.

7. Locking/unlocking device (4) for a mudguard (8) of vehicles (12) according to any one of claims 1 to 6, wherein the first stop means (34) comprise a first flexible plate (54) superimposed on the first slide (30) and separated therefrom by a first meatus (56), so as to be able to house the first guide (32) of the mudguard (8), said first plate (54) being flexible along said vertical direction (Y-Y) so as to reduce said first meatus (56) if subjected to traction by the first stop means (34), wherein the first stop means (34) are configured to exert a bending action of the first flexible plate (54) towards the first slide (30), parallel to a vertical direction (Y-Y), perpendicular to said longitudinal axis (X-X).

8. Locking/unlocking device (4) for a mudguard (8) of vehicles (12) according to any one of claims 1 to 7, wherein the second slide (76) comprises a second upright (84) directed along a vertical direction (Y-Y), perpendicular to said longitudinal axis (X-X), and a second crosspiece (86) directed along a transverse direction (T-T) parallel to said longitudinal axis (X-X), arranged symmetrically with respect to the second upright (84), wherein the second crosspiece (86) ends, at opposite transverse ends (42), with a pair of second fixing appendages (88) extending along said vertical direction (Y-Y), from parts opposite the second crosspiece (86) itself.

9. Locking/unlocking device (4) for a mudguard (8) of vehicles (12) according to claim 8, wherein said second fixing appendages (88) have second straight side walls (90), perpendicular to said transverse direction (T-T), wherein said second straight side walls (90) are spaced apart by a second transverse dimension (92) between 30 mm and 34 mm.

10. Locking/unlocking device (4) for a mudguard (8) of vehicles (12) according to any one of claims 8 to 9, wherein said second fixing appendages (88) have a second vertical height (94) between 8 mm and 12 mm, wherein the ratio between said second transverse dimension (92) and said second vertical height (94) is between 2.5 and 4.25.

11. Locking/unlocking device (4) for a mudguard (8) of vehicles (12) according to any one of claims 8 to 10, wherein the second crosspiece (86) is configured as a direct cantilevered beam along a tangential axis, perpendicular to said longitudinal axis (X-X), said beam being curvilinear and having a radius of curvature (R) between 600 and 700 mm, preferably equal to 660 mm.

12. Locking/unlocking device (4) for a mudguard (8) of vehicles (12) according to any one of claims 1 to 11, wherein the second stop means (82) comprise a second flexible plate (96) superimposed on the second slide (76) and separated therefrom by a second meatus (98), so as to be able to house the second guide (80) of the mudguard (8), said second plate (96) being flexible along said vertical direction (Y-Y) so as to reduce said second meatus (98) if subjected to traction by the second stop means (82), wherein the second stop means (82) are configured to exert a bending action of the second flexible plate (96) towards the second slide (76), parallel to a vertical direction (Y-Y), perpendicular to said longitudinal axis (X-X).

13. Locking/unlocking device (4) for a mudguard (8) of vehicles (12) according to any one of claims 1 to 12, wherein the second fixing ring (66) comprises an inner axial shoulder (100) which creates an end stroke in the axial insertion of a cantilevered end (102) of the support rod (26) for said mudguard (8), wherein the locking/unlocking device (4) comprises a coupling cap (104), associable with the support rod (26) and configured to obtain a shape coupling with said inner axial shoulder (100).

14. Locking/unlocking device (4) for a mudguard (8) of vehicles (12) according to any one of claims 1 to 13, wherein said first fixing ring (16) and second fixing ring (66) have a longitudinal extension (112), parallel to said longitudinal axis (X-X), between 50 mm and 80 mm.

15. Mudguard assembly comprising a locking/unlocking device (4) according to any one of claims 1 to 14, and a mudguard (8) provided with a first and a second tangential guide (32,80), parallel to each other, each guide (32,80) comprising a pair of fins (116) shaped so as to delimit a seat for said slides (30,76), said seat having an upper transverse opening (120) greater than or equal to a transverse width of the upright (36,84) and a lower chamber (124) having a greater transverse width than the transverse width of the crosspiece (40,86) with the relative fixing appendages (44,88).
